# EUROPEAN PATENT APPLICATION

(11) **EP 3 276 931 A1**
(43) Date of publication of application: **31.01.2018**
(21) Application number: 17183186.0
(22) Date of filing: 26.07.2017
(51) Int. Cl.: H04N 1/00, G06F 3/0488, G06F 3/0486, G06F 3/0487, G06F 3/12

(54) **ELECTRONIC APPARATUS AND IMAGE FORMING APPARATUS**

(30) Priority: 29.07.2016 JP 2016150675
(71) Applicant: KYOCERA Document Solutions Inc., Osaka-shi, Osaka 540-8585 (JP)
(72) Inventor: DANDOKO, Takushi, Osaka-shi, Osaka 540-8585 (JP); FUJIMOTO, Norie, Osaka-shi, Osaka 540-8585 (JP); MIYAMOTO, Takanori, Osaka-shi, Osaka 540-8585 (JP); HANADA, Naoto, Osaka-shi, Osaka 540-8585 (JP)
(74) Representative: BRP Renaud & Partner mbB Rechtsanwälte Patentanwälte Steuerberater

(57) **Abstract**

An electronic apparatus (10) includes an operation receiving section (101) and a display control section (104). The operation receiving section (101) receives a touch operation on an operation screen (D1). If a change in a predetermined state occurs in the electronic apparatus (10), the display control section (104) causes a notification image indicating details of the change to be displayed on the operation screen (D1). The display control section (104) causes a small-sized medium-term notification image (Gb1) to be displayed on the operation screen (D1) if the operation receiving section (101) receives a request for reducing a size of a medium-term notification image (Gb) displayed on the operation screen (D1) and causes a small-sized long-term notification image (Gc1) to be displayed in a predetermined area (E2) in which a display of display information displayed by the operation screen (D1) is not hindered if the operation receiving section (101) receives a request for reducing a size of a long-term notification image (Gc) displayed on the operation screen (D1).

## Description

### BACKGROUND

The present invention relates to an electronic apparatus and an image forming apparatus and, more particularly, to technology for notifying a user of a change in a state of a device.

Displaying a notification image indicating the details of a change in a state on a display section of an electronic apparatus is known as technology for notifying a user of the details of the change if a change in the state occurs. For example, displaying changed details on an operation screen with a banner and displaying a reception notification screen indicating reception of an e-mail on the operation screen are known.

### SUMMARY

As an aspect of the present invention, technology obtained by further improving the above-described technology is provided.

According to an aspect of the present invention, an electronic apparatus includes a display section, a display control section, and an operation receiving section.

The display section has a touch panel function.

The display control section performs display control of the display section.

The operation receiving section receives a touch operation on an operation screen displayed on the display section according to the touch panel function provided in the display section.

If a change in a predetermined state occurs in the electronic apparatus, the display control section causes (i) a medium-term notification image which is displayed for a predetermined medium- to long-term time and of which display is unnecessary when a time has elapsed and (ii) a long-term notification image of which display is continuously maintained regardless of the passage of time to be superimposed and displayed on the operation screen as a notification image indicating details of the change.

Further, the display control section causes a small-sized medium-term notification image to be displayed within the operation screen if the operation receiving section receives a size reduction request for changing the size to a predetermined small size with respect to the medium-term notification image displayed on the operation screen and causes a small-sized long-term notification image to be displayed in a predetermined area in which a display of display information to be displayed by the operation screen is not hindered if the operation receiving section receives a size reduction request with respect to the long-term notification image displayed on the operation screen.

According to another aspect of the present invention, an image forming apparatus includes an image forming section; the display section; the display control section; and the operation receiving section.

The image forming section forms an image on a recording medium.

### BRIEF DESCRIPTION OF THE DRAWINGS

FIG. 1 is a functional block diagram schematically illustrating a main internal configuration of an image forming apparatus according to a first embodiment of the present invention.
FIG. 2 is a flowchart illustrating an example of a process to be performed by a control unit in the image forming apparatus according to the first embodiment.
FIG. 3 is a diagram illustrating an example of an operation screen displayed on a display section.
FIG. 4A is a diagram illustrating an example of a state in which a notification image is displayed on the operation screen displayed on a display section and illustrates an example of a temporary notification image.
FIG. 4B is a diagram illustrating an example of a state in which a notification image is displayed on the operation screen displayed on the display section and illustrates an example of a medium-term notification image.
FIG. 4C is a diagram illustrating an example of a state in which a notification image is displayed on the operation screen displayed on the display section and illustrates an example of a long-term notification image.
FIG. 5 is a flowchart illustrating an example of a process to be performed by the control unit in the image forming apparatus according to the first embodiment.
FIG. 6A is a diagram illustrating an example of a state in which a long-term notification image of a normal size is displayed on the display section.
FIG. 6B is a diagram illustrating an example of a state in which a small-sized long-term notification image is displayed on the display section.
FIG. 7 is a flowchart illustrating an example of a process to be performed by the control unit in the image forming apparatus according to the first embodiment.
FIG. 8A is a diagram illustrating an example of a state in which a medium-term notification image of a normal size is displayed on the display section.
FIGS. 8B and 8C are diagrams illustrating examples of a state in which a small-sized medium-term notification image is displayed on the display section.

### DETAILED DESCRIPTION

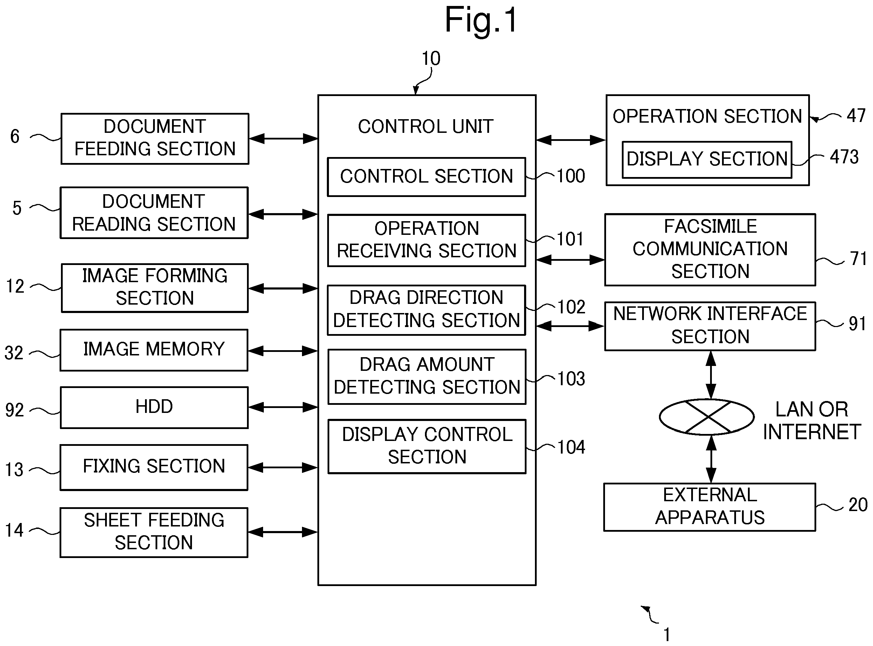

Hereinafter, embodiments of an electronic apparatus and an image forming apparatus according to the present invention will be described with reference to the drawings. FIG. 1 is a functional block diagram schematically illustrating a main internal configuration of the image forming apparatus which is an electronic apparatus according to a first embodiment of the present invention. The image forming apparatus 1 is, for example, a multifunctional machine having a plurality of functions such as a copy function, a printer function, a scanner function, and a facsimile function, and includes a control unit 10, a document feeding section 6, a document reading section 5, an image forming section 12, an image memory 32, a hard disk drive (HDD) 92, a fixing section 13, a sheet feeding section 14, an operation section 47, a facsimile communication section 71, and a network interface section 91.

The document feeding section 6 feeds a document to be read to the document reading section 5. Under the control of a control section 100 constituting the control unit 10, the document reading section 5 radiates light to a document using the light irradiation section and receives reflected light, thereby reading an image from the document. Image data obtained by the document reading section 5 reading the document is stored in the image memory 32.

The image forming section 12 forms a toner image of an image to be printed on a sheet (a recording medium). The image memory 32 is an area for temporarily storing image data of a document obtained through a read operation of the document reading section 5 and temporarily saving data to be printed by the image forming section 12.

The HDD 92 is a large-capacity storage apparatus for storing document images and the like read by the document reading section 5. The fixing section 13 fixes the toner image on the sheet to the sheet by thermo-compression. The sheet feeding section 14 includes a sheet feeding cassette (not illustrated), and picks up and transports the sheets accommodated in the sheet feeding cassette.

The operation section 47 receives instructions such as an image forming operation execution instruction and a document read operation execution instruction from the operator concerning various operations and processes capable of being executed by the image forming apparatus 1. The operation section 47 includes a display section 473 for displaying an operation guide and the like to an operator. The display section 473 is a touch panel, and the operator can operate the image forming apparatus 1 by touching buttons and keys displayed on the screen.

The facsimile communication section 71 performs facsimile communication, and the network interface section 91 transmits and receives various data to and from an external apparatus 20 such as a personal computer in a local area or on the Internet.

The control unit 10 is configured to include a processor, a random access memory (RAM), a read only memory (ROM), and a dedicated hardware circuit. The processor is, for example, a central processing unit (CPU), an application specific integrated circuit (ASIC), a micro processing unit (MPU), or the like. The control unit 10 includes the control section 100 that performs the overall operation control of the image forming apparatus 1, an operation receiving section 101, a drag direction detecting section 102, a drag amount detecting section 103, and a display control section 104.

The control unit 10 functions as the control section 100, the operation receiving section 101, the drag direction detecting section 102, the drag amount detecting section 103, and the display control section 104 according to an operation according to a control program installed in the HDD 92. However, the control section 100 or the like can be constituted of a hardware circuit regardless of an operation according to the control program of the control unit 10. Hereinafter, the same is true for each embodiment unless otherwise mentioned.

The control section 100 is connected to the document feeding section 6, the document reading section 5, the image forming section 12, the image memory 32, the HDD 92, the fixing section 13, the sheet feeding section 14, the operation section 47, the facsimile communication section 71, and the network interface section 91, and controls driving of these parts.

The operation receiving section 101 identifies a user operation input by the user on the basis of a detected signal output from the operation section 47. For example, the operation receiving section 101 receives a touch operation (for example, a tap operation or a drag operation) on the operation screen displayed on the display section 473 according to a touch panel function provided in the display section 473. Then, the operation receiving section 101 receives the identified user operation and outputs a control signal corresponding to the user operation to the control section 100 or the like.

The drag direction detecting section 102 detects a direction of a drag operation received by the operation receiving section 101. The drag amount detecting section 103 detects an amount of drag in a drag operation received by the operation receiving section 101.

The display control section 104 controls a display of the display section 473. For example, the display control section 104 may cause an operation screen to be displayed on the display section 473, and cause a notification image indicating the details of a change displayed on the operation screen to be superimposed and displayed on existing display information on the operation screen if a change in a predetermined state occurs in the image forming apparatus 1.

The notification images are divided into a temporary notification image to be temporarily displayed and a medium- to long-term notification image to be displayed over a medium- to long term.

As a temporary notification image, for example, a notification image indicating a change in a size of a sheet to be fed can be cited, and it is only necessary to display such a notification image for about several seconds.

Also, for example, with respect to a notification image indicating that the scanner is being cleaned or a malfunction has occurred, display for about several seconds is not sufficient, and display for a longer time is required. Such a notification image is regarded as a medium- to long-term notification image.

Medium- to long-term notification images are subdivided into (1) a medium-term notification image which is displayed for a predetermined medium- to long-term time and of which display is unnecessary when a time has elapsed and (2) a long-term notification image of which display is continuously maintained regardless of the passage of time.

As the medium-term notification image, for example, a notification image indicating that the scanner is being cleaned is included. Such a notification image is displayed until sufficient time required for processing has elapsed (until the cleaning of the scanner is completed).

Examples of the long-term notification image include notification images indicating malfunction occurrence and use restriction. A notification image indicating that a malfunction has occurred needs to be displayed until there has been recovery from the malfunction and the notification image indicating a use restriction needs to be displayed until a manager cancels the restriction.

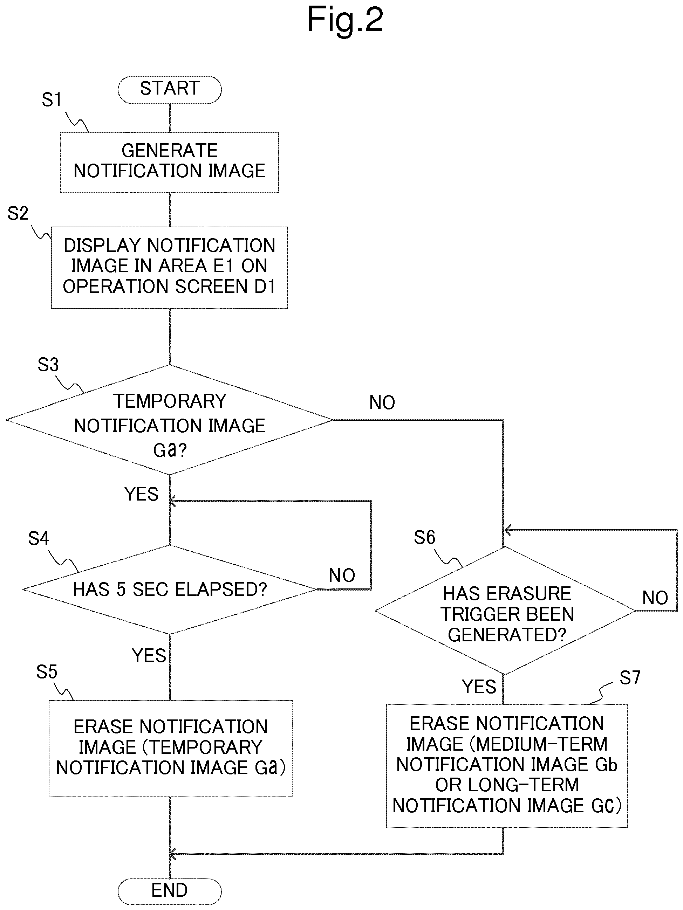

Next, a processing operation in which the control unit 10 causes the display section 473 to display a notification image will be described with reference to the flowchart illustrated in FIG. 2. Also, this processing operation is an operation to be performed when the control section 100 determines that a change in a predetermined state has occurred in the image forming apparatus 1.

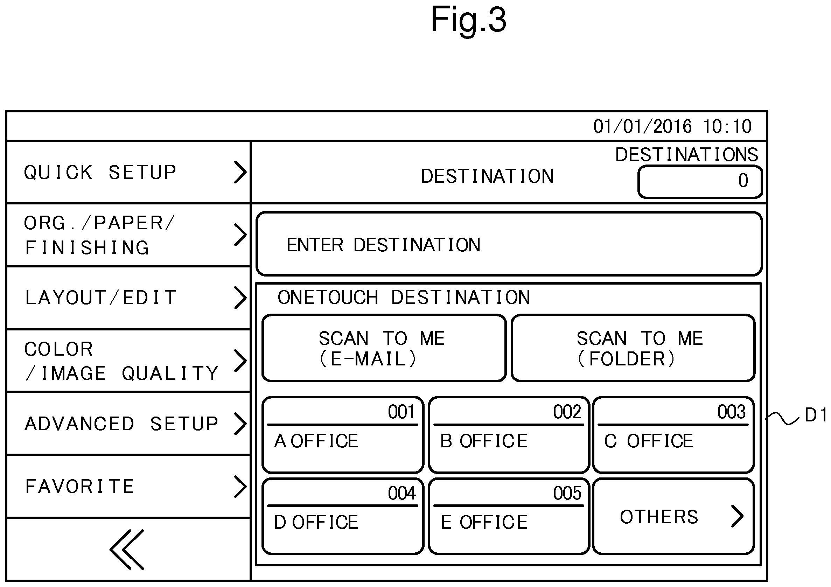

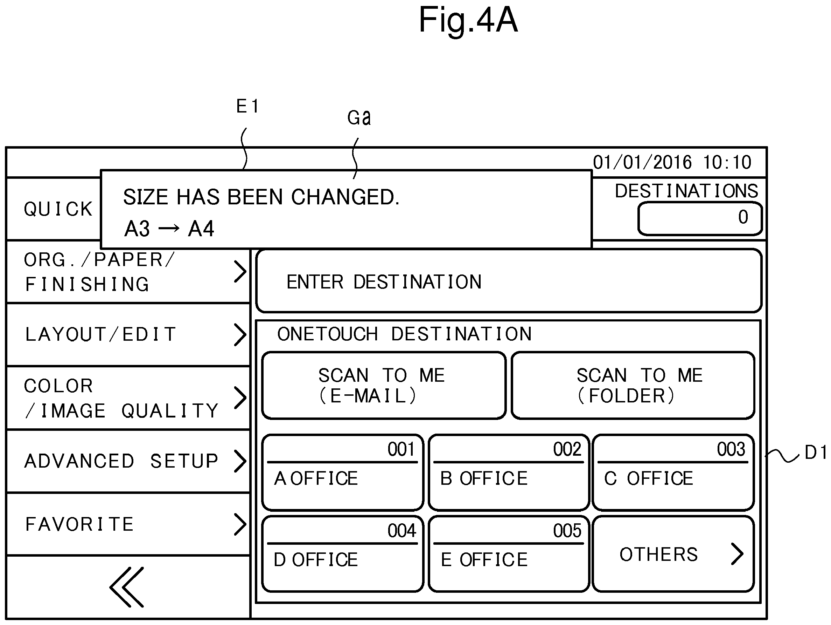

When the control section 100 determines that a change in a state has occurred, the display control section 104 generates a notification image indicating details of the change on the basis of information indicating the details of the change in the state output from the control section 100 (S1), and displays the generated notification image in a predetermined area E1 (FIGS. 4A to 4C) on an operation screen D1 (FIGS. 3 and 4A to 4C) displayed on the display section 473 (S2). The generation by the display control section 104 also includes reading a notification image stored in a memory or the like built into the control unit 10 and determining the notification image as a subject for display on the display section 473.

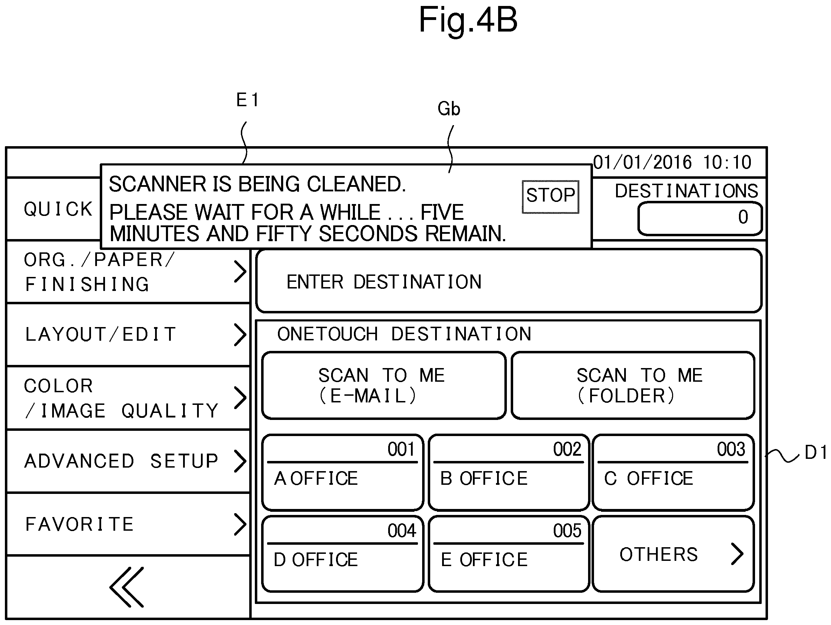

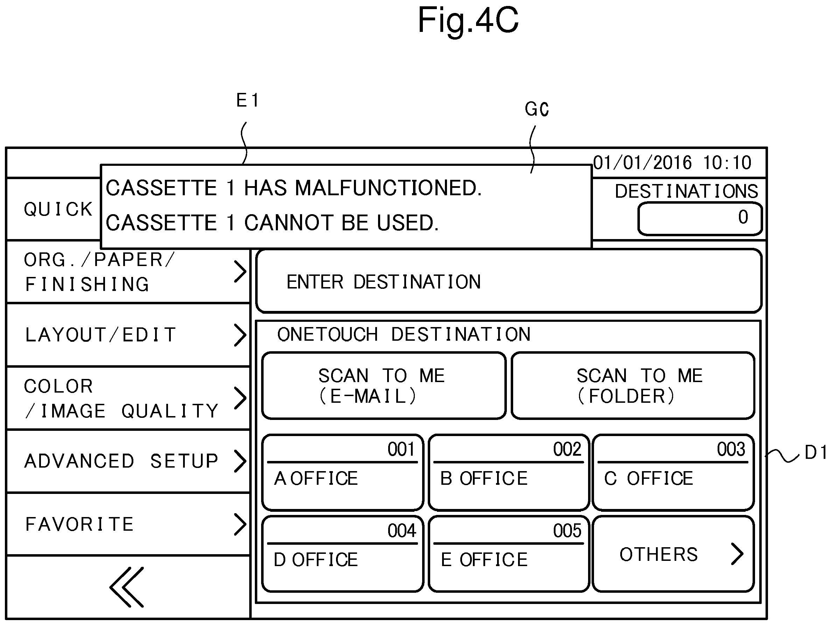

FIG. 3 is a diagram illustrating an example of the operation screen D1 displayed on the display section 473. FIGS. 4A to 4C are diagrams illustrating an example of a state in which a notification image is displayed on the operation screen D1. FIG. 4A is an example of a temporary notification image Ga and illustrates a case in which a size of a fed sheet has been changed from A3 to A4. FIG. 4B illustrates an example of a medium-term notification image Gb indicating that the scanner is being cleaned and the remaining time until the cleaning is completed is "5 minutes and 50 seconds." FIG. 4C illustrates an example of a long-term notification image Gc, which indicates that a malfunction has occurred in the sheet feeding cassette.

Subsequently, the display control section 104 determines whether or not the notification image displayed on the display section 473 is a temporary notification image Ga (S3). Also, whether the notification image is a temporary notification image Ga, a medium-term notification image Gb, or a long-term notification image Gc may be determined on the basis of information indicating the details of the change in the state output from the control section 100.

For example, the notification image may be determined to be a temporary notification image Ga if the details of the change in the state are a change in the sheet size, the notification image may be determined to be a medium-term notification image Gb if the details of the change in the state are the cleaning of the scanner, and the notification image may be determined to be a long-term notification image Gc if the details of the change in the state are the occurrence of a malfunction.

If the display control section 104 determines that the notification image is a temporary notification image Ga (YES in S3), the display control section 104 determines whether or not a predetermined set time (for example, 5 seconds) has elapsed after the display of the notification image (the temporary notification image Ga) on the display section 473 (S4). If it is determined that the set time has elapsed (YES in S4), the display control section 104 erases the notification image (the temporary notification image Ga) from the display section 473 (S5).

On the other hand, if the display control section 104 determines that the notification image is not a temporary notification image Ga (the notification image is a medium-term notification image Gb or a long-term notification image Gc) (NO in S3), the display control section 104 determines whether or not an erasure trigger for erasing the notification image has occurred (S6).

If it is determined that an erasure trigger has occurred (YES in S6), the display control section 104 erases the notification image (the medium-term notification image Gb or the long-term notification image Gc) from the display section 473 (S7).

If the medium-term notification image Gb indicates that the scanner is being cleaned, a signal indicating completion of the cleaning is output as an erasure trigger from the control section 100 to the display control section 104 when the cleaning of the scanner is completed. If the long-term notification image Gc indicates occurrence of a malfunction, a signal indicating the completion is output as an erasure trigger from the control section 100 to the display control section 104 when the repair of the malfunction is completed.

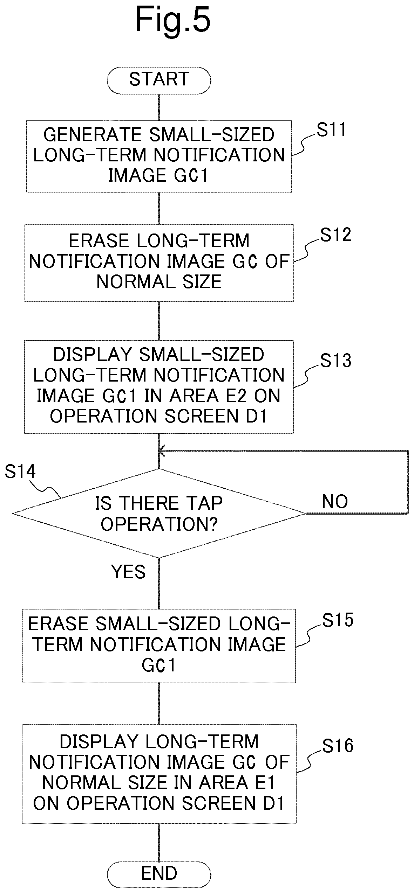

Next, the processing operation of reducing the size of a long-term notification image Gc in the control unit 10 will be described with reference to the flowchart illustrated in FIG. 5. Also, this processing operation is an operation to be performed when the operation receiving section 101 receives a tap operation on the long-term notification image Gc.

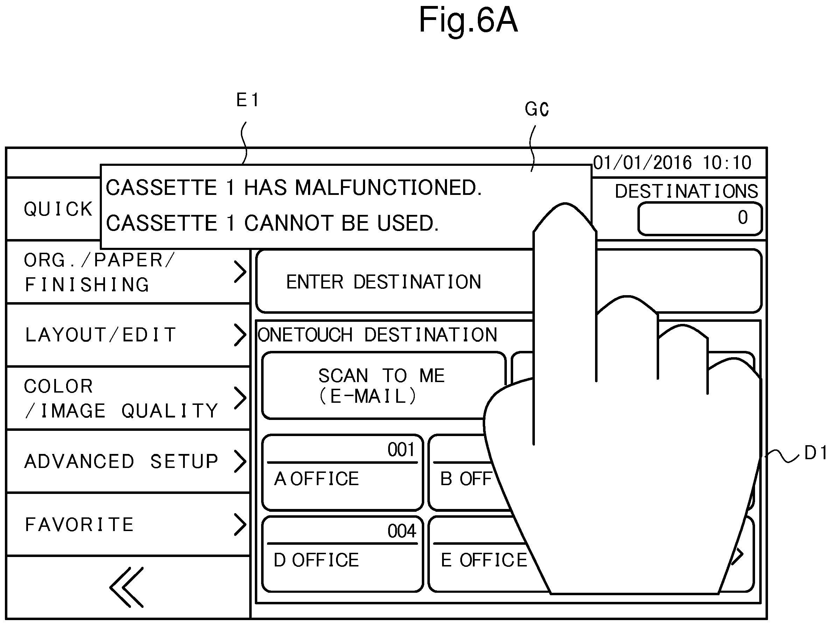

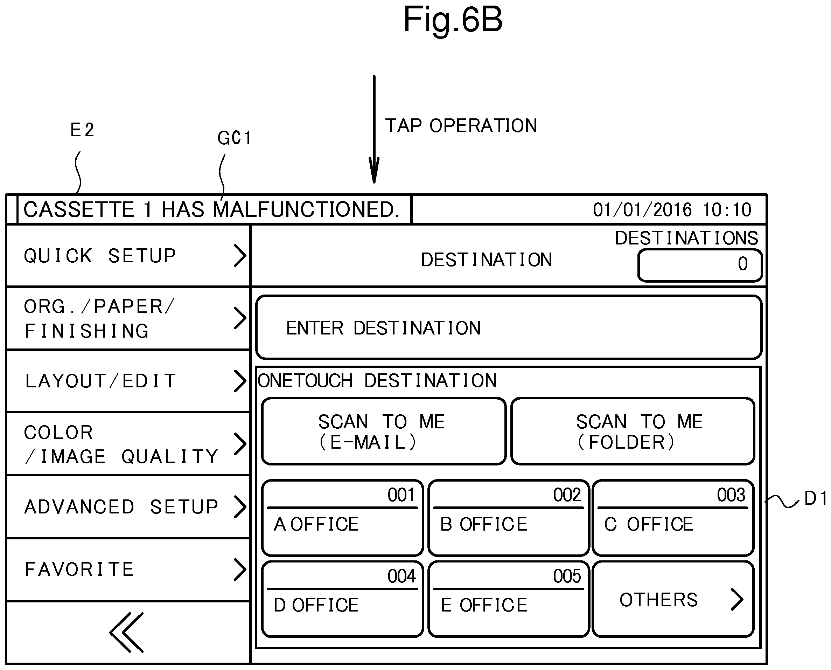

When the operation receiving section 101 receives a tap operation on a long-term notification image Gc, the display control section 104 generates a small-sized long-term notification image Gc1 (S11), and the display control section 104 erases the long-term notification image Gc of the normal size from the display section 473 (S12) and causes the small-sized long-term notification image Gc1 to be displayed in a predetermined area E2 (FIGS. 6A and 6B) of the display section 473 (S13). The area E2 is a predetermined area in which the display of the display information displayed on the operation screen D1 is not hindered. For example, the area E2 may be a margin portion on the left side of the upper end portion of the operation screen D1 (an area predetermined as an area in which a message is not displayed to the user).

FIG. 6A illustrates a state in which a long-term notification image Gc of normal size is displayed in the area E1, and FIG. 6B illustrates a state in which a small-sized long-term notification image Gc1 is displayed in the area E2. As illustrated in FIG. 6, when the long-term notification image Gc of the normal size is tapped, the small-sized long-term notification image Gc1 is displayed by the display control section 104.

Subsequently, the operation receiving section 101 determines whether or not a tap operation on the small-sized long-term notification image Gc1 has been performed by the user (S14). If the operation receiving section 101 has received a tap operation on the small-sized long-term notification image Gc1 (YES in S14), the display control section 104 erases the small-sized long-term notification image Gc1 from the display section 473 (S15), and causes the long-term notification image Gc of the normal size to be displayed in the area E1 of the display section 473 (S16). That is, the display control section 104 returns the display state of the long-term notification image Gc to a state before size reduction.

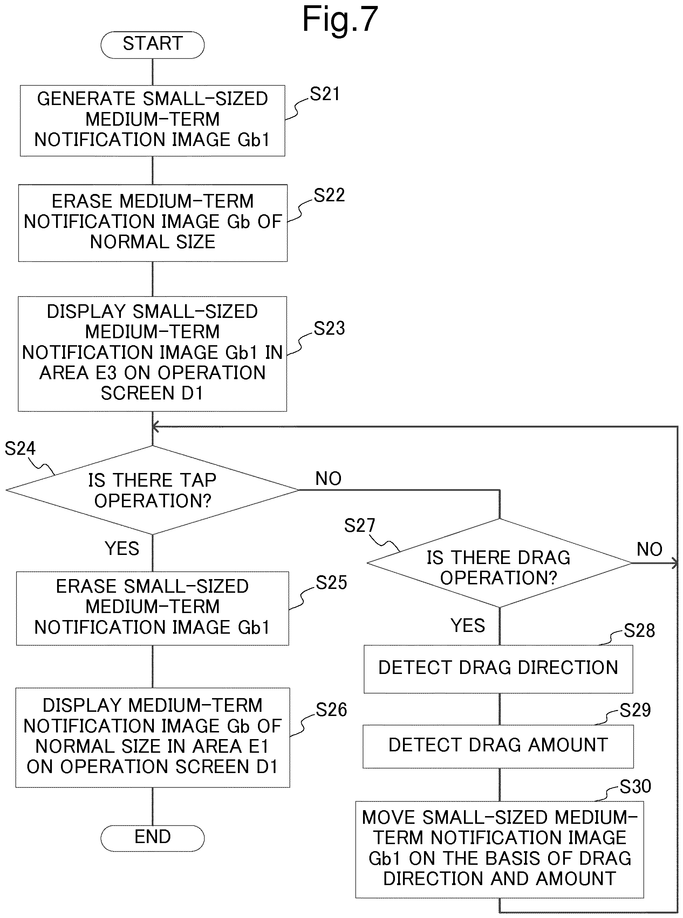

Next, the processing operation in which the control unit 10 reduces the size of a medium-term notification image Gb will be described with reference to the flowchart illustrated in FIG. 7. This processing operation is performed if the operation receiving section 101 receives a tap operation on the medium-term notification image Gb.

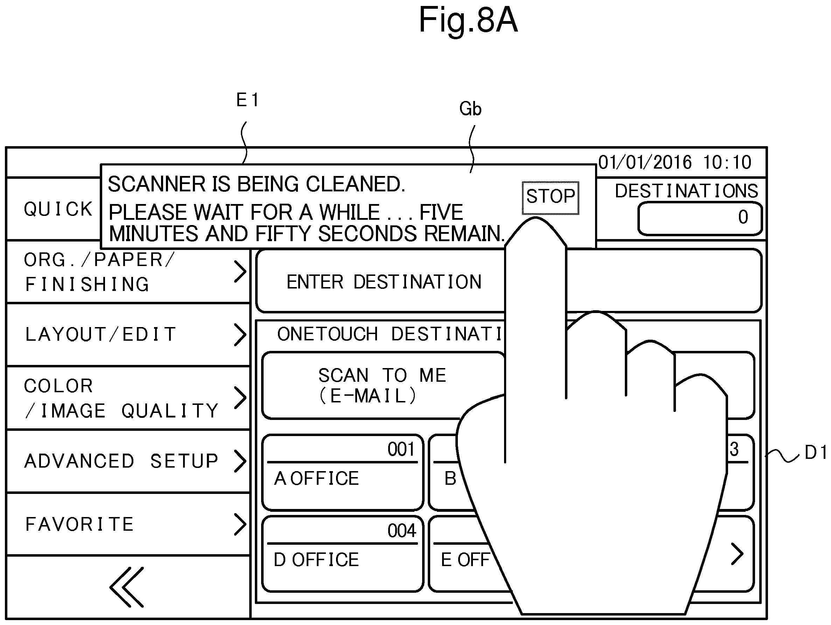

When the operation receiving section 101 receives a tap operation on the medium-term notification image Gb, the display control section 104 generates a small-sized medium-term notification image Gb1 (S21) and the display control section 104 erases the medium-term notification image Gb of the normal size from the display section 473 (S22) and causes the small-sized medium-term notification image Gb1 to be displayed in an area E3 (FIGS. 8A to 8C) of the display section 473 (S23). The area E3 may be at any position on the operation screen D1, but an example in which the area E3 is an area different from the area E2 is shown in the present embodiment.

Subsequently, the operation receiving section 101 determines whether or not a tap operation has been performed on the small-sized medium-term notification image Gb1 (S24). If the operation receiving section 101 has received a tap operation on the small-sized medium-term notification image Gb1 (YES in S24), the display control section 104 erases the small-sized medium-term notification image Gb1 from the display section 473 (S25) and displays the medium-term notification image Gb of the normal size in the area E1 of the display section 473 (S26). That is, the display state of the medium-term notification image Gb is returned to the state before size reduction.

On the other hand, if the operation receiving section 101 has not received a tap operation on the small-sized medium-term notification image Gb1 (NO in S24), the operation receiving section 101 determines whether or not the user has performed a drag operation on the small-sized medium-term notification image Gb1 (S27).

If the operation receiving section 101 receives a drag operation on the small-sized medium-term notification image Gb1 (YES in S27), the drag direction detecting section 102 detects a direction of the drag operation received by the operation receiving section 101 (S28), the drag amount detecting section 103 detects an amount of drag of the drag operation received by the operation receiving section 101 (S29), and the display control section 104 moves the small-sized medium-term notification image Gb1 on the operation screen D1 on the basis of a drag direction detected by the drag direction detecting section 102 and an amount of drag detected by the drag amount detecting section 103 (S30). That is, the display control section 104 moves the small-sized medium-term notification image Gb1 on the operation screen D1 on the basis of a movement direction calculated from the drag direction detected by the drag direction detecting section 102 and an amount of movement calculated from the amount of drag detected by the drag amount detecting section 103.

On the other hand, if the operation receiving section 101 does not receive a drag operation on the small-sized medium-term notification image Gb1 (NO in S27), the process returns to S24.

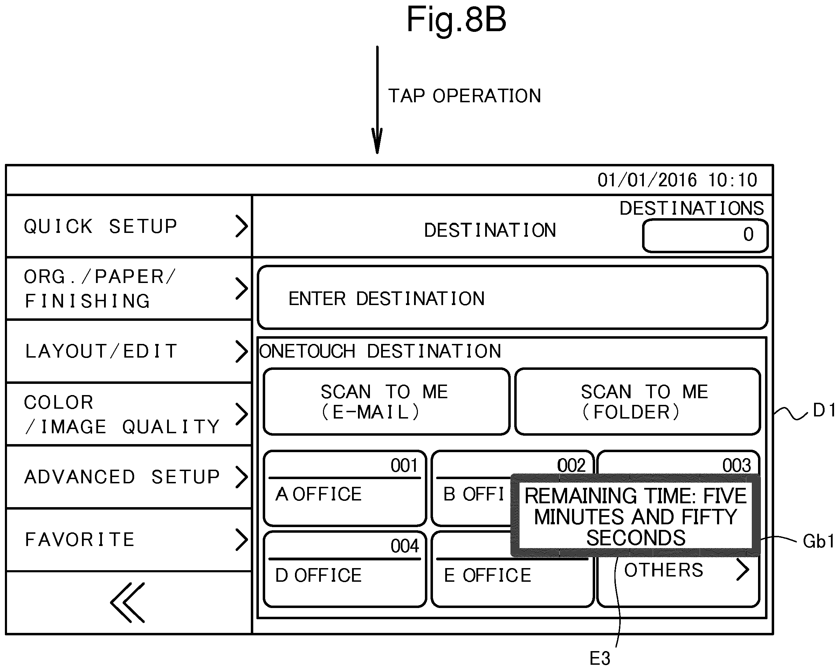

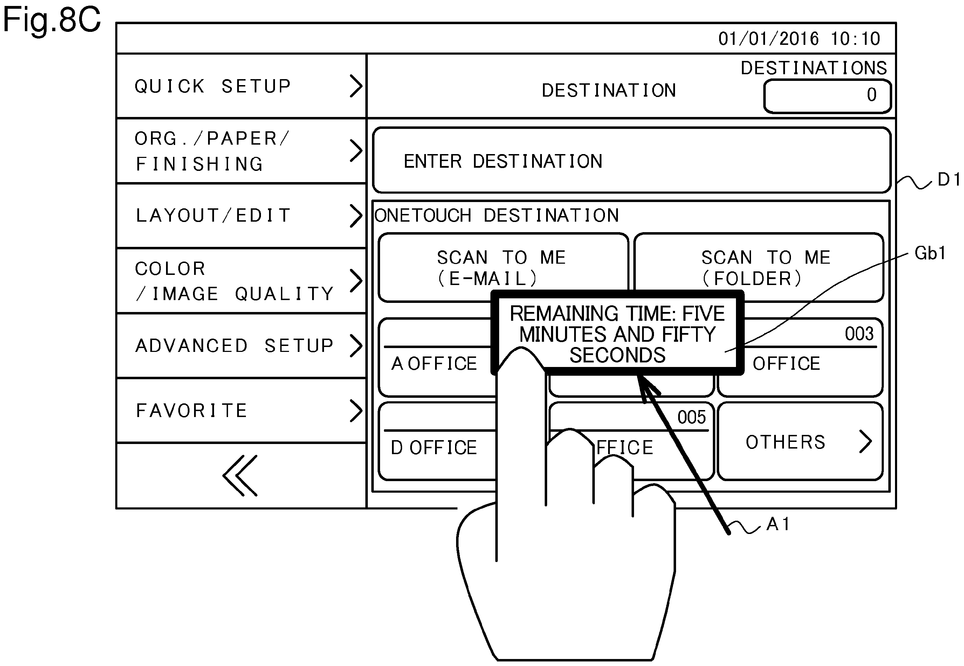

FIG. 8A illustrates a state in which the medium-term notification image Gb of normal size is displayed in the area E1, FIG. 8B illustrates a state in which the small-sized medium-term notification image Gb1 is displayed in the area E3, and FIG. 8C illustrates a state in which the small-sized medium-term notification image Gb1 is moved. As illustrated in FIGS. 8A to 8C, the small-sized medium-term notification image Gb1 is displayed when the medium-term notification image Gb of the normal size is tapped, and the small-sized medium-term notification image Gb1 is moved in a direction of an arrow A1 if the medium-term notification image G1 is dragged in the direction of the arrow A1.

After S30, the process returns to S24, and with YES in S24, a series of processing steps which are S25 and S26 are performed, or with NO in S24, and YES in S27, a series of processing steps which are S28 to S30 are performed. Accordingly, after the small-sized medium-term notification image Gb1 is moved on the operation screen D1 according to the drag direction (movement direction) calculated in S28 and the amount of drag (the amount of movement) calculated in S29 (S30), if the operation receiving section 101 receives a request for restoring the small-sized medium-term notification image Gb1 to the original size (YES in S24), the operation receiving section 101 causes the medium-term notification image Gb of the original size (the normal size) to be displayed in the area E1 which was an area of display before the size reduction (S25, S26).

According to the first embodiment, the notification image (the temporary notification image Ga, the medium-term notification image Gb, or the long-term notification image Gc) indicating the details of the change in the state is displayed on the operation screen D1. That is, because the notification image interrupts and displayed on the operation screen D1, it is possible to accurately notify the user of the details of the change in the state. Also, the medium-term notification image Gb and the long-term notification image Gc are made small-sized in response to a request from the user. That is, it is possible to reduce the size of a medium-term notification image Gb and a long-term notification image Gc which do not end due to temporary display, so that it is difficult for the user operation to be obstructed. Accordingly, it is possible to avoid degradation of operability while accurately notifying the user of the details of the change in the state in the device.

Also, the small-sized long-term notification image Gc1 is displayed in the area E 2 in which a user operation is not interfered with and fixed in the area E2, whereas the small-sized medium-term notification image Gb1 is displayed in the area E3 which is different from the area E2. Also, it is possible to move the small-sized medium-term notification image Gb1 according to a drag operation. That is, display of a long-term notification image Gc, which is likely to be displayed for longer than a medium-term notification image Gb, is set to be further restricted.

Accordingly, because the small-sized long-term notification image Gc1 is displayed in the area E2 which is a predetermined area in which the display of the display information displayed on the operation screen D1 is not hindered and therefore a display mode is different from that of the small-sized medium-term notification image Gb1 according to a length of time required for a notification by display, it is possible to avoid deterioration in operability while accurately notifying a user of the details of changes in state in the image forming apparatus 1 individually according to the details of a message displayed in each of a long-term notification image and a medium-term notification image.

For example, there is no problem with the user operation if a notification image such as a banner or a reception notification screen is erased immediately after display from the operation screen, but there may be a problem with user operation when the notification image is continuously displayed on the operation screen. Particularly, if the display section has the touch panel function, continuously displaying the notification image on the operation screen can be a great obstacle to user operation. However, when it is desired that a user be made aware of a problem to be solved according to a banner or the like, it is not preferable to hide the display of the banner after a short time. In this regard, according to the above-described embodiment, as described above, it is possible to avoid deterioration of operability while suitably notifying a user of the details of a change in a state in the image forming apparatus 1.

The present invention is not limited to the configuration of the above-described embodiment, and various modifications are possible. Although the image forming apparatus which is a multifunctional machine is used as an embodiment of the electronic apparatus according to the present invention in the above-described embodiment, this is merely an example. Other electronic apparatuses, for example, image forming apparatuses such as a copy machine, a facsimile machine, and a printer, may be used as the electronic apparatus. Further, a personal computer, a mobile device, or the like may be used as the electronic apparatus.

Further, in the above-described embodiment, the configuration and processing shown in the above-described embodiment with reference to FIG. 1 to FIG. 8C are merely an embodiment of the present invention, and the present invention is not limited to this configuration and processing.

## Claims

1. An electronic apparatus comprising:
a display section (473) having a touch panel function;
a display control section (104) configured to perform display control of the display section (473); and
an operation receiving section (101) configured to receive a touch operation on an operation screen (D1) displayed on the display section (473) according to the touch panel function provided in the display section (473),
wherein, if a change in a predetermined state occurs in the electronic apparatus (10), the display control section (104) causes (i) a medium-term notification image (Gb) which is displayed for a predetermined medium- to long-term time and of which display is unnecessary when a time has elapsed and (ii) a long-term notification image (Gc) of which display is continuously maintained regardless of the passage of time to be superimposed and displayed on the operation screen (D1) as a notification image indicating details of the change, and
wherein the display control section (104) further causes a small-sized medium-term notification image (Gb1) to be displayed within the operation screen (D1) if the operation receiving section (101) receives a size reduction request for changing the size to a predetermined small size with respect to the medium-term notification image (Gb) displayed on the operation screen (D1) and causes a small-sized long-term notification image (Gc1) to be displayed in a predetermined area (E2) in which a display of display information to be displayed by the operation screen (D1) is not hindered if the operation receiving section (101) receives a size reduction request with respect to the long-term notification image (Gc) displayed on the operation screen (D1).

2. The electronic apparatus according to claim 1, wherein the display control section (104) causes the long-term notification image (Gc) or the medium-term notification image (Gb) of an original size to be displayed in an area (E1) of display before size reduction if the operation receiving section (101) receives a request for restoration to the original size of the small-sized long-term notification image (Gc1) or medium-term notification image (Gb1).

3. The electronic apparatus according to claim 1, wherein the display control section (104) causes a display position on the operation screen (D1) to be moved in accordance with an operation received by the operation receiving section (101) after the small-sized medium-term notification image (Gb1) is displayed.

4. The electronic apparatus according to any of claims 1 to 3, comprising:
a drag direction detecting section (102) configured to detect a drag direction of a drag operation received by the operation receiving section (101); and
a drag amount detecting section (103) configured to detect an amount of drag of the drag operation received by the operation receiving section (101),
wherein the display control section (104) causes the small-sized medium-term notification image (Gb1) to be moved on the operation screen (D1) in a movement direction calculated from the drag direction detected by the drag direction detecting section (102) and an amount of movement calculated from the amount of drag detected by the drag amount detecting section (103) if the operation receiving section (101) receives a drag operation on the small-sized medium-term notification image (Gb1).

5. The electronic apparatus according to claim 4, wherein the display control section (104) causes the medium-term notification image (Gb) of an original size to be displayed in an area (E1) of display before size reduction if the operation receiving section (101) receives a request for restoration to the original size of the small-sized medium-term notification image (Gb1) after the small-sized medium-term notification image (Gb1) is moved on the operation screen (D1) according to the calculated movement direction and the calculated amount of movement.

6. An image forming apparatus comprising:
an image forming section configured to form an image on a recording medium;
a display section (473) having a touch panel function;
a display control section (104) configured to perform display control of the display section (473); and
an operation receiving section (101) configured to receive a touch operation on an operation screen (D1) displayed on the display section (473) according to the touch panel function provided in the display section (473),
wherein, if a change in a predetermined state occurs in the electronic apparatus (10), the display control section (104) causes (1) a medium-term notification image (Gb) which is displayed for a predetermined medium- to long-term time and of which display is unnecessary when a time has elapsed and (2) a long-term notification image (Gc) of which display is continuously maintained regardless of the passage of time to be superimposed and displayed on the operation screen (D1) as a notification image indicating details of the change, and
wherein the display control section (104) further causes a small-sized medium-term notification image (Gb1) to be displayed within the operation screen (D1) if the operation receiving section (101) receives a size reduction request for changing the size to a predetermined small size with respect to the medium-term notification image (Gb) displayed on the operation screen (D1) and causes a small-sized long-term notification image (Gc1) to be displayed in a predetermined area (E2) in which a display of display information to be displayed by the operation screen (D1) is not hindered if the operation receiving section (101) receives a size reduction request with respect to the long-term notification image (Gc) displayed on the operation screen (D1).
